# EUROPEAN PATENT SPECIFICATION

(11) **EP 2 311 599 B1**
(45) Date of publication and mention of the grant of the patent: **19.06.2013**
(21) Application number: 10187025.1
(22) Date of filing: 08.10.2010
(51) Int. Cl.: B23Q 1/54, B23Q 1/62, B23Q 3/06

(54) **Five-axis milling machine**
Fünf-Achsen-Fräsmaschine
Machine de fraisage à cinq axes

(30) Priority: 14.10.2009 IT PD20090297
(43) Date of publication of application: 20.04.2011
(73) Proprietor: Worldmec S.r.l., 36065 Mussolente, Frazione CASONI (VI) (IT)
(72) Inventor: Bernardi, Roberto, 36065 Mussolente VI (IT)
(74) Representative: Modiano, Micaela Nadia

(56) References cited:
- EP-A1- 1 262 275
- EP-A2- 0 712 682
- WO-A1-2008/092646
- DE-A1-102006 027 395
- JP-A- 59 142 035
- US-A1- 2007 251 071

## Description

The present invention relates to a milling machine, particularly of the five-axis numeric-control type for providing products for prosthodonties, for medical implants and for decorating precious items and materials.

Milling machines with very high precision, adapted to provide three-dimensional products, are currently known in the field of numeric-control machine tools, in the medical field and for the decoration of precious items and materials.

One problem that the manufacturers of these machines have sought to solve, devising various solutions, is to allow to provide easily so-called undercuts, i.e., recessed portions to be provided to the rear of a face to be machined.

The currently known types of machine that are capable of allowing the provision of undercuts have a spindle which is supported so as to perform a translational motion along three mutually perpendicular axes of translational motion.

The part to be machined is supported by a tilting worktable, which is adapted to rotate even to the point of overturning the part, with respect to the spindle positioning region.

A first type of these machines, shown for example in EP 0 712 682 A2 and according to the preamble of claim 1, has a spindle that oscillates about an oscillation axis which is perpendicular to the rotation axis of the milling tool.

This type of machine has the problem of having to provide a spindle tilting motor which is supported on a first slider, which can slide on a second slider, which in turn can slide on a third slider, which can slide on the frame, respectively along such three axes of translational motion.

Therefore, in addition to the spindle, the tilting motor also bears on the sliders and it is therefore necessary to provide a positioning motor drive thereof that is correspondingly proportionate, in order to allow their quick and precise movement, to the full disadvantage of the structural simplicity of the machine.

A second type of currently known machine, for example as disclosed in US 2007/251071 A1, provides for means for rotating the entire worktable assembly about an axis which is perpendicular to the tilting axis of the worktable.

This type of machine, too, is structurally complex.

The aim of the present invention is to provide a milling machine that allows to provide undercuts while having a simpler structure than currently known milling machines.

Within this aim, an object of the invention is to propose a milling machine which, for an equal performance, is more compact than currently known milling machines.

Another obj ect of the invention is to provide a milling machine which, for an equal machining to be performed, requires less powerful motors to position its components than currently known milling machines.

Another object of the invention is to propose a milling machine that is easy to use and can be manufactured with relatively low costs.

In accordance with the invention, there is provided a milling machine as defined in the appended claims.

Further characteristics and advantages of the invention will become better apparent from the following detailed description of a preferred but not exclusive embodiment of the milling machine according to the invention, illustrated by way of non-limiting example in the accompanying drawings, wherein;

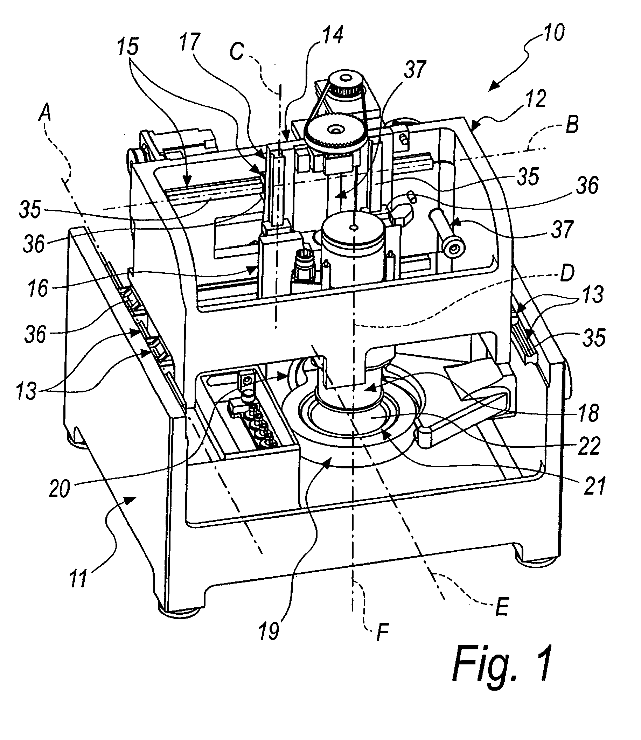

Figure 1 is a first perspective view of a milling machine according to the invention;

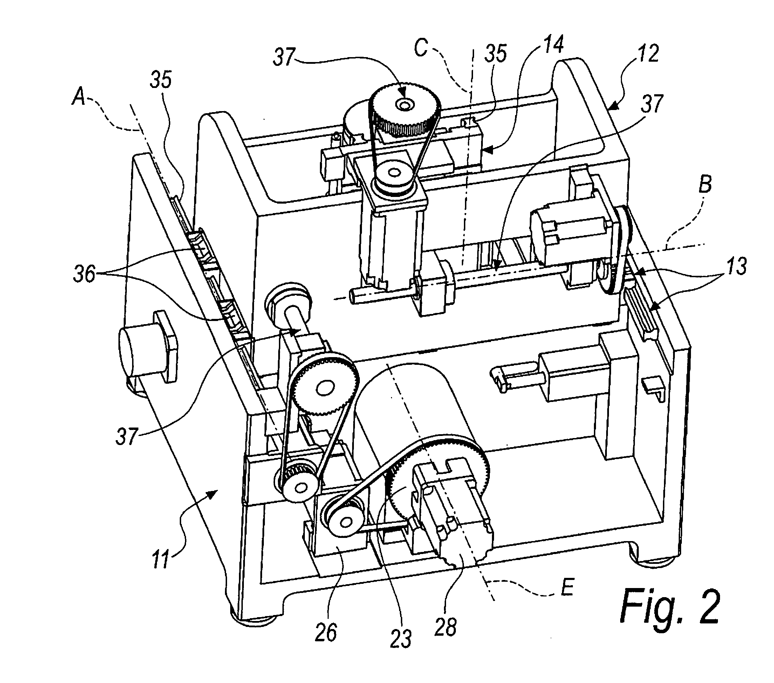

Figure 2 is a second perspective view of the milling machine according to the invention;

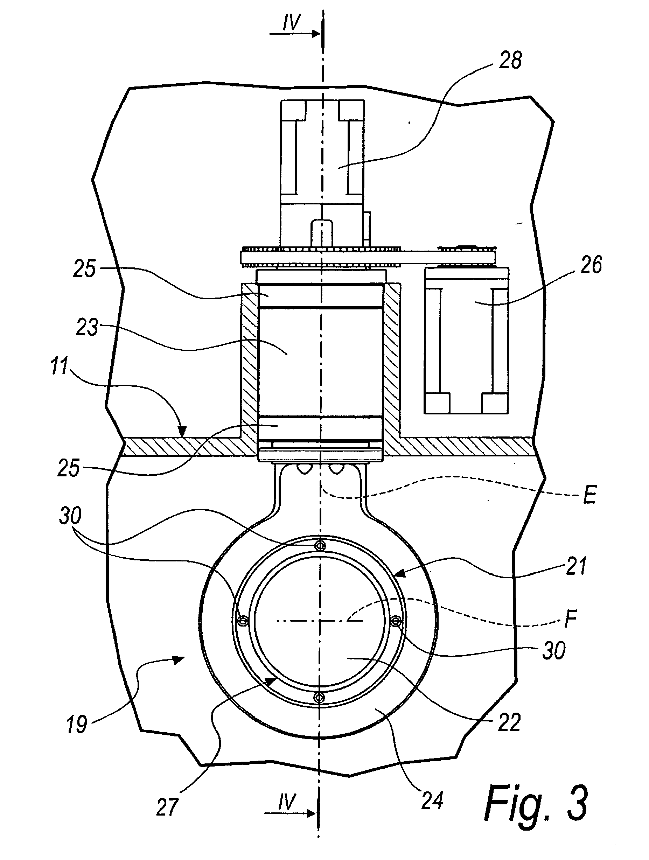

Figure 3 is an enlarged-scale and partially sectional view of a detail of the milling machine according to the invention;

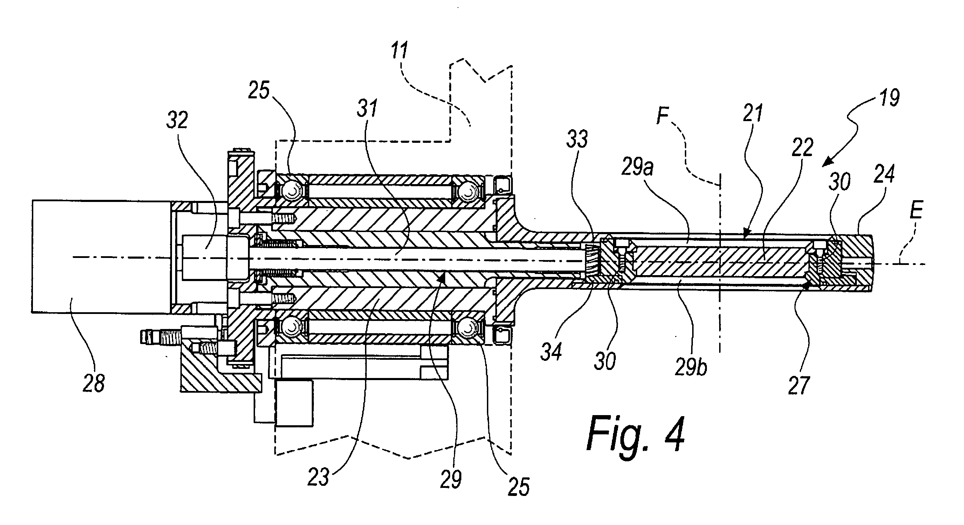

Figure 4 is an enlarged-scale sectional view of a detail of the milling machine according to the invention, taken along the line IV-IV of Figure 3.

It is noted that anything found to be already known during the patenting process is understood not to be claimed and to be the subject of a disclaimer.

With reference to the figures, the reference numeral 10 generally designates a milling machine, particularly of the five axis numeric-control type for providing products for prosthodontics, for medical implants and for decorating precious items and materials, which comprises
- a frame 11,
- a first slider 12, first guiding means 13 being provided which define a first axis of translational motion A of the first slider 12 on the frame 11,
- a second slider 14, second guiding means 15 being provided which define a second axis of translational motion B of the second slider 14 on the first slider 12,
- a third slider 16, third guiding means 17 being provided which define a third axis of translational motion C of the third slider 16 on the second slider 14,
- a spindle 18, which is supported by the third slider 16 and forms a first rotation axis D, for a milling tool which it supports during use,
- a worktable 19, which is supported by the frame 11,
- first rotation means 20, which define a second rotation axis E of the worktable 19 with respect to the frame 11, the second rotation axis E being preferably perpendicular to the first rotation axis D,
- second means 21 for rotation of a part 22 which is fixed on the worktable 19 about a third rotation axis F which is substantially perpendicular to the second rotation axis E, the second rotation means 21 being supported by the worktable 19.

In alternative and substantially equivalent embodiments of the invention, the second rotation axis E might not be perpendicular to the first rotation axis D, so long as it is in general not parallel thereto.

Advantageously, the third rotation axis F during use lies on a plane which is parallel to the first rotation axis D.

The worktable 19 preferably comprises
- a body 23 for connection to the frame 11, and
- a slot 24 for supporting the part 22 to be machined, which is jointly connected to the connecting body 23.

The first rotation means 20 conveniently comprise
- bearings 25 which are interposed between the frame 11 and the connecting body 23, the second rotation axis E being defined by the axis of the bearings 25, and
- a first motor 26 for the rotation of the of the connecting body 23 with respect to the frame 11 about the second rotation axis E.

In general, in alternative embodiments of the invention, the first rotation means 20 can comprise at least one bearing.

Moreover, the second rotation means 21 conveniently comprise
- an annular clamp 27, for locking the part 22 to be machined, such clamp being supported by the slot 24 so that it can rotate about the third rotation axis F,
- a second motor 28, which is supported by the connecting body 23 and is coupled, by means of a mechanical transmission 29, to the clamp 27 for its rotation about the third rotation axis F.

The clamp 27 advantageously comprises two annular jaws 29a and 29b, which are connected by means of screws 30 adapted for their mutual tightening and are mutually opposite with respect to a part 22 to be held.

Preferably, the mechanical transmission 29 comprises a transmission shaft 31, which is connected to the shaft of the second motor 28, conveniently by means of a joint 32, and is provided with a toothed pinion 33 for meshing with a toothed ring 34 which is jointly connected to the clamp 27.

Preferably, the first guiding means 13, the second guiding means 15 and the third guiding means 17 comprise
- rails 35 and sliders 36 which are slidingly coupled thereto,
- a linear actuator 37, which is conveniently of the screw type, adapted for the relative translational motion of the first slider 12 on the frame 11, of the second slider 14 on the first slider 12 and of the third slider 16 on the second slider 14.

The operation of a milling machine according to the invention is as follows.

The part 22 to be machined is fixed to the worktable 19 by means of the clamp 27.

Then a device for controlling the milling machine 10 drives its linear actuators 37 in order to guide the spindle 18 along a work trajectory.

Moreover, the control device drives the first motor 26 and the second motor 28 in order to orient the part continuously, rotating it about the second rotation axis E and the third rotation axis F, so as to allow the spindle to machine it, by means of such milling tool, providing even the most complex undercuts.

In practice it has been found that the invention achieves the intended aim and objects, devising a milling machine that allows to provide undercuts while having a structure that is simpler than currently known milling machines; in fact, only the part to be machined, and not only the worktable, is made to rotate about the third rotation axis.

Further, a milling machine according to the invention, for an equal performance with respect to currently known milling machines, is more compact, since it does not require the means for turning the worktable about the third rotation axis.

Moreover, for an equal machining to be performed, with respect to currently known milling machines a milling machine according to the invention requires less powerful motors to position its components; the second motor in fact needs to rotate only the part to be machined and not the entire worktable.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

## Claims

1. A milling machine, particularly of the five-axis numeric-control type for providing products for prosthodontics, for medical implants and for decorating precious items and materials, comprising
- a frame (11),
- a first slider (12), first guiding means (13) being provided which define a first axis (A) of translational motion of said first slider (12) on said frame (11),
- a second slider (14), second guiding means (15) being provided which define a second axis (B) of translational motion of said second slider (14) on said first slider (12),
- a third slider (16), third guiding means (17) being provided which define a third axis (C) of translational motion of said third slider (16) on said second slider (14),
- a spindle (18), which is supported by said third slider (16) and defines a first rotation axis (D) for a milling tool which it holds during use,
- a worktable (19), which is supported by said frame (11),
- first rotation means (20), which define a second rotation axis (E) of said worktable (19) with respect to said frame (11), said second rotation axis (E) not being parallel to said first rotation axis (D),
- second means (21) for rotation of a part (22) that is fixed on said worktable (19) about a third rotation axis (F) which is substantially perpendicular to said second rotation axis (E), said second rotation means (21) being supported by said worktable (19),
said worktable (19) comprising
- a body (23) for connection to said frame (11),
said first rotation means (20) comprising
- at least one bearing (25) interposed between said frame (11) and said connecting body (23), said second rotation axis (E) being defined by the axis of said at least one bearing (25), and
- a first motor (26) for the rotation of said connecting body (23) with respect to said frame (11),
the milling machine being **characterised in** said worktable comprising
- a slot (24) for supporting the part (22) to be machined, which is jointly connected to said connecting body (23),
said second rotation means (21) comprising
- an annular clamp (27) for locking the part (22) to be machined, said clamp being supported by said slot (24) so that it can rotate about said third rotation axis (F),
- a second motor (28), which is supported by said connecting body (23) and is coupled, by means of a mechanical transmission (29), to said clamp (27) for its rotation,
said mechanical transmission (29) comprising a transmission shaft (31), which extends along said second rotation axis (E) inside said connecting body (23), and which is connected to the shaft of said second motor (28) and is provided with a toothed pinion (33) for meshing with a toothed ring (34) which is jointly connected to said clamp (27).

2. The milling machine according to claim 1, **characterized in that** said second rotation axis (E) is perpendicular to said first rotation axis (D).

3. The milling machine according to one or more of the preceding claims, **characterized in that** said third rotation axis (F) lies, during use, on a plane that is parallel to said first rotation axis (D).

4. The milling machine according to claim 1, **characterized in that** said annular clamp (27) comprises two annular jaws (29a, 29b), which are connected by means of screws (30) which are adapted for their mutual tightening and are mutually opposite with respect to a part (22) to be held.

5. The mining machine according to one or more of the preceding claims, **characterized in that** at least one among said first guiding means (13), said second guiding means (15) and said third guiding means (17) comprise
- rails (35) and sliders (36) which are slidingly coupled thereto;
- a linear actuator (37), which is adapted for the relative translational motion of the components of said milling machine that are connected by means of said rails (35) and sliders (36).

## Patentansprüche

1. Eine Fräsmaschine, insbesondere vom fünfachsigen numerisch gesteuerten Typ, zur Bereitstellung von Produkten für die Dentalprothetik, für medizinische Implantate und zur Dekortion wertvoller Gegenstände und Materialien, Folgendes umfassend:
- einen Rahmen (11),
- einen ersten Schieber (12), wobei erste Führungsmittel (13) bereitgestellt sind, die eine erste Achse (A) einer translatorischen Bewegung des ersten Schiebers (12) auf dem Rahmen (11) bestimmen,
- einen zweiten Schieber (14), wobei zweite Führungsmittel (15) bereitgestellt sind, die eine zweite Achse (B) einer translatorischen Bewegung des zweiten Schiebers (14) auf dem ersten Schieber (12) bestimmen,
- einen dritten Schieber (16), wobei dritte Führungsmittel (17) bereitgestellt sind, die eine dritte Achse (C) der translatorischen Bewegung des dritten Schiebers (16) auf dem zweiten Schieber (14) bestimmen,
- eine Spindel (18), die von dem dritten Schieber (16) getragen wird und eine erste Drehachse (D) für ein Fräswerkzeug bestimmt, das sie während des Gebrauchs hält,
- einen Werktisch (19), der von dem Rahmen (11) getragen wird,
- erste Drehmittel (20), die eine zweite Drehachse (E) des Werktischs (19) mit Bezug auf den Rahmen (11) bestimmen, wobei die zweite Drehachse (E) nicht parallel zu der ersten Drehachse (D) ist,
- zweite Mittel (21) zur Drehung eines Teils (22), das auf dem Werktisch (19) befestigt ist, um eine dritte Drehachse (F), die im Wesentlichen senkrecht zu der zweiten Drehachse (E) ist, wobei die zweiten Drehmittel (21) von dem Werktisch (19) getragen werden,
wobei der Werktisch (19) Folgendes umfasst:
- einen Körper (23) zur Verbindung mit dem Rahmen (11), wobei die ersten Drehmittel (20) Folgendes umfassen:
- mindestens ein Lager (25), das zwischen dem Rahmen (11) und dem Verbindungskörper (23) angeordnet ist, wobei die zweite Drehachse (E) von der Achse des mindestens einen Lagers (25) bestimmt wird, und
- einen ersten Motor (26) für die Drehung des Verbindungskörpers (23) im Verhältnis zu dem Rahmen (11),
wobei die Fräsmaschine **dadurch gekennzeichnet ist, dass** der Werktisch einen Schlitz (24) zum Tragen des Teils (22) umfasst, das bearbeitet werden soll, der fest mit dem Verbindungskörper (23) verbunden ist,
wobei die zweiten Drehmittel (21) Folgendes umfassen:
- eine ringförmige Klemme (27) zum Blockieren des zu bearbeitenden Teils (22), wobei die Klemme von dem Schlitz (24) getragen wird, so dass sie sich um die dritte Drehachse (F) drehen kann,
- einen zweiten Motor (28), der von dem Verbindungskörper (23) getragen wird und zum Zwecke seiner Drehung über ein mechanisches Getriebe (29) mit der Klemme (27) gekoppelt ist,
wobei das mechanische Getriebe (29) eine Getriebewelle (31) umfasst, die sich in dem Verbindungskörper (23) entlang der zweiten Drehachse (E) erstreckt, und die mit der Welle des zweiten Motors (28) verbunden ist und die mit einem Ritzel (33) zum Eingreifen in einen Zahnkranz (34) ausgestattet ist, der fest mit der Klemme (27) verbunden ist.

2. Die Fräsmaschine gemäß Anspruch 1, **dadurch gekennzeichnet, dass** die zweite Drehachse (E) senkrecht zu der ersten Drehachse (D) ist.

3. Die Fräsmaschine gemäß einem oder mehreren der obigen Ansprüche, **dadurch gekennzeichnet, dass** die dritte Drehachse (F) während des Gebrauchs auf einer Ebene liegt, die parallel zu der ersten Drehachse (D) ist.

4. Die Fräsmaschine gemäß Anspruch 1, **dadurch gekennzeichnet, dass** die ringförmige Klemme (27) zwei ringförmige Klauen (29a, 29b) umfasst, die durch Schrauben (30) verbunden sind, welche zu ihrer gegenseitigen Befestigung ausgebildet sind und mit Bezug auf ein zu haltendes Teil (22) einander gegenüberliegen.

5. Die Fräsmaschine gemäß einem oder mehreren der obigen Ansprüche, **dadurch gekennzeichnet, dass** mindestens eines der ersten Führungsmittel (13), der zweiten Führungsmittel (15) und der dritten Führungsmittel (17) Folgendes umfasst:
- Schienen (35) und Schieber (36), die verschiebbar damit gekoppelt sind,
- ein lineares Betätigungselement (37), das ausgebildet ist zur relativen translatorischen Bewegung der Komponenten der Fräsmaschine, die durch Schienen (35) und Schieber (36) verbunden sind.

## Revendications

1. Machine de fraisage, en particulier du type à commande numérique à cinq axes destinée à fournir des produits de prosthodontie, d'implants médicaux et à décorer des objets précieux comprenant
- un cadre (11),
- un premier coulisseau (12), des premiers moyens de guidage (13) étant prévus, lesquels définissent un premier axe (A) du mouvement de translation dudit premier coulisseau (12) sur ledit cadre (11),
- un deuxième coulisseau (14), des seconds moyens de guidage (15) étant prévus, lesquels définissent un deuxième axe (B) du mouvement de translation dudit second coulisseau (12) sur ledit premier coulisseau (12),
- un troisième coulisseau (16), des troisièmes moyens de guidage (17) étant prévus, lesquels définissent un troisième axe (C) du mouvement de translation dudit troisième coulisseau (16) sur ledit deuxième coulisseau (14),
- une broche (18) qui est soutenue par ledit troisième coulisseau (16) et définit un premier axe de rotation (D) pour un outil de fraisage qui le maintient pendant l'utilisation,
- une table de travail (19) qui est supportée par ledit cadre (11),
- des premiers moyens de rotation (20) qui définissent un second axe de rotation (E) de ladite table de travail (19) par rapport audit cadre (11), ledit second axe de rotation (E) n'étant pas parallèle audit premier axe de rotation (D),
- des seconds moyens (21) pour la rotation d'une partie (22) qui est fixée sur ladite table de travail (19) autour d'un troisième axe de rotation (F) qui est sensiblement perpendiculaire audit second axe de rotation (E), lesdits seconds moyens de rotation (21) étant supportés par ladite table de travail (19), ladite table de travail (19) comprenant
- un corps (23) pour la liaison audit cadre (11), lesdits premiers moyens de rotation (20) comprenant
- au moins un palier (25) interposé entre ledit cadre (11) et ledit corps de liaison (23), ledit second axe de rotation (E) étant défini par l'axe dudit au moins un palier (25), et
- un premier moteur (26) pour la rotation dudit corps de liaison (23) par rapport audit cadre (11),
la machine de fraisage étant **caractérisée en ce que** ladite table de travail comprend
- une fente (24) pour supporter la partie (22) à usiner, qui est reliée par articulation audit corps de liaison (23),
lesdits seconds moyens de rotation (21) comprenant
- une pince annulaire (27) pour verrouiller la partie (22) à usiner, ladite pince étant supportée par ladite fente (24) de sorte qu'elle puisse tourner autour dudit troisième axe de rotation (F),
- un second moteur (28) qui est supporté par ledit corps de liaison (23) et est couplé à l'aide d'une transmission mécanique (29) à ladite pince (27) pour sa rotation,
ladite transmission mécanique (29) comprenant un arbre de transmission (31) qui s'étend le long dudit deuxième axe de rotation (E) à l'intérieur dudit corps de liaison (23) et qui est relié à l'arbre dudit second moteur (28) et est doté d'un pignon denté (33) pour l'engrènement avec un anneau denté (34) qui est relié par articulation à ladite pince (27).

2. Machine de fraisage selon la revendication 1, **caractérisée en ce que** ledit deuxième axe de rotation (E) est perpendiculaire audit premier axe de rotation (D).

3. Machine de fraisage selon l'une ou plusieurs quelconques des revendications précédentes, **caractérisée en ce que** ledit troisième axe de rotation (F) se trouve pendant l'utilisation sur un plan qui est parallèle audit premier axe de rotation (D).

4. Machine de fraisage selon la revendication 1, **caractérisée en ce que** ladite pince annulaire (27) comprend deux mâchoires annulaires (29a, 29b) qui sont reliées à l'aide de vis (30) qui sont adaptées pour leur serrage mutuel et sont mutuellement opposées par rapport à une partie (22) à maintenir.

5. Machine de fraisage selon l'une ou plusieurs quelconques des revendications précédentes, **caractérisée en ce qu'**au moins un parmi lesdits premiers moyens de guidage (13), lesdits deuxièmes moyens de guidage (15) et lesdits troisièmes moyens de guidage (17) comprennent
- des rails (35) et des coulisseaux (36) qui sont couplés par glissement ;
- un actionneur linéaire (37) qui est adapté pour le mouvement de translation relative des composants de ladite machine de fraisage qui sont reliés à l'aide desdits rails (35) et coulisseaux (36).
